# EUROPÄISCHE PATENTSCHRIFT

(11) **EP 1 795 990 B1**
(45) Veröffentlichungstag und Bekanntmachung des Hinweises auf die Patenterteilung: **10.11.2010**
(21) Anmeldenummer: 06125543.6
(22) Anmeldetag: 06.12.2006
(51) Int. Cl.: G05G 1/10, G05G 5/03, H01H 19/11

(54) **Bedieneinheit für eine Fahrzeugkomponente**
Operating unit for a vehicle component
Unité de commande pour un composant de véhicule

(30) Priorität: 07.12.2005 DE 102005058288
(43) Veröffentlichungstag der Anmeldung: 13.06.2007
(73) Patentinhaber: Behr-Hella Thermocontrol GmbH, 70190 Stuttgart (DE)
(72) Erfinder: Kluge, Christian, 44227 Dortmund (DE); Hagen, Andreas, 59590 Geseke (DE)
(74) Vertreter: von Kreisler Selting Werner

(56) Entgegenhaltungen:
- EP-A1- 0 756 440
- US-A- 2 153 430
- US-A- 3 975 601
- US-A- 4 038 508
- US-A- 4 324 958
- US-A- 4 504 706

## Beschreibung

Die Erfindung betrifft eine Bedieneinheit für eine Fahrzeugkomponente, bei der es sich insbesondere um eine Heizungs-/Klimaanlage für ein Fahrzeug handelt. Durch die Insassen bedienbare Fahrzeugkomponenten weisen zumeist ein Bediengerät auf, das mehrere Bedieneinheiten in Form von Tasten, Drehbedienelementen oder Schiebern aufweist. Bewegbare Bedieneinheiten wie Dreh- und Schiebebedienelemente verfügen zumeist über eine Verrastung, um das bewegbare Bedienelement in seiner eingestellten Bewegungsposition zu halten. Neben der Rast- und Haltefunktion kommt der Verrastung mitunter auch die Aufgabe zu, dem Bediener durch das Rastgeräusch eine akustische Rückmeldung bezüglich der vorgenommenen Verstellung zu geben.

Aus US-A-2,153,430 ist ein Drehschalter bekannt, der eine Scheibe mit einer Außenverzahnung bzw. welligem Außenrand aufweist. Diese Scheibe liegt an einer Bügelfeder an. Das Federbügelelement weist eine in eine Vertiefung des welligen Außenrandes eingetauchte Nase auf, von der aus sich beidseitig der Nase Federarme erstrecken, die sich im wesentlichen radial verformen, wenn die Scheibe gedreht wird und auf diese Weise die Nase aus der einen Vertiefung des Außenrandes der Scheibe in die benachbarte Vertiefung bewegt wird.

US-A-4,324,958 beschreibt einen Schiebeschalter, bei dem das Schieberelement durch eine Bügelfeder in einer von drei stabilen Verschiebestellungen gehalten wird.

Aus EP-A-0 756 440 ist ein Drehschalter mit Raststellungen bekannt, in denen die Nase eines Federbügelelements in Rastvertiefungen eines von einem Drehknopf drehbaren Scheibenelements eintaucht.

Schließlich ist aus US-A-3,975,601 ein Drehschalter bekannt, bei dem bei Verdrehung eines Scheibenelements mit Außenverzahnung in eine von zwei entgegengesetzten Richtungen ein Kontaktelement eines von zwei Kontaktpaaren kurzzeitig schließt. Eine Verrastung des Scheibenelements erfolgt durch einen Federarm mit einer Rastnase an seinem freien Ende. Das Kontaktelement wird bei Umkehrung der Drehrichtung des Scheibenelements für eine kurze Strecke in Umfangsrichtung mitgenommen, um dann bei weiterer Verdrehung des Schreibenelements die Kontakte des jeweiligen Kontaktpaares intermittierend kurzzeitig zu schließen.

Aufgabe der Erfindung ist es, eine Bedieneinheit für eine Fahrzeugkomponente mit rastender Feststellung der jeweiligen Bewegungsposition des Bedienelements zu schaffen, über dessen Konstruktion sich das entstehende Rastgeräusch vorgeben lässt.

Zur Lösung dieser Aufgabe wird mit der Erfindung eine Bedieneinheit für eine Fahrzeugkomponente, insbesondere für eine Heizungs-/Klimaanlage für ein Fahrzeug vorgeschlagen, wobei die Bedieneinheit versehen ist mit den Merkmalen des Anspruchs 1. Die Unteransprüche betreffen einzelne Ausgestaltungen der Erfindung.

Nach der Erfindung ist an einem Lagerelement, an dem das Bedienelement bewegbar gelagert ist, ein Federbügelelement angeordnet, das eine im wesentlichen zentrisch angeordnete Nase mit zwei sich von dieser aus erstreckenden Federarmen aufweist. Die einander abgewandten Enden der Federarme sind zur gleichen Seite hin abgewinkelt, so dass das Federbügelelement in Seitenansicht im wesentlichen eine U-förmige Ausgestaltung aufweist. Das Federbügelelement ist in Erstreckungsrichtung der Federarme mit Spiel an zwei Lagerstellen des Lagerelements gelagert, wobei die abgewinkelten (Lager-)Enden der Federarme beide Lagerstellen umgreifen. Ferner taucht die Nase des Federbügelelements in eine der mehreren Vertiefungen der Außenverzahnung des Bedienelements (ggf. mit Spiel) ein.

Die so gestaltete Bedieneinheit erzeugt ein deutlich hörbares "Klick"-Geräusch, wenn das Bedienelement jeweils zur nächsten Raststellung bewegt wird. Bei dieser Bewegung wird das Federbügelelement zunächst über die in eine Vertiefung eingetauchte Rastnase mitgenommen, bis das entgegengesetzt zur Bewegungsrichtung angeordnete Lagerende des Federbügelelements durch die Lagerstelle, die es umgreift, an einer weiteren Mitbewegung gehindert wird. Bei weiterer Bewegung des Bedienelements rückt die Nase unter federelastischer Verformung der Federarme aus der Vertiefung heraus und gleitet dabei an der der Vertiefung benachbarten Erhöhung der Außenverzahnung des Bedienelements entlang. Sobald die Nase den Scheitelpunkt dieser Erhöhung passiert hat, was bei weiterer Bewegung des Bedienelements der Fall ist, schnappt die Nase selbsttätig in die benachbarte Vertiefung hinein. Dabei bewegt sich das Federbügelelement entgegengesetzt zur Bewegung des Bedienelements, bis sein in Bewegungsrichtung des Bedienelements liegendes Lagerende, das zuvor mit Abstand zu der ihm zugeordneten Lagerstelle angeordnet war, gegen diese Lagerstelle schlägt. Hierbei entsteht das charakteristische Klick-Geräusch, das einerseits durch die Materialpaarung Lagerende/Lagerstelle und andererseits durch die Oberflächenformgebung von Lagerende und Lagerstelle bestimmt ist. So können beispielsweise diese Oberflächen für einen Linien- oder Flächenkontakt ausgebildet sein. Die unterschiedlichen Konturen und Materialpaarungen resultieren in unterschiedlichen Anschlaggeräuschen, je nachdem, welches Geräusch gewünscht ist.

Auf das Anschlaggeräusch wirkt sich unter anderem auch aus, inwieweit das Lagerelement oder die um das Bedienelement herum angeordneten Baueinheiten der Bedieneinheit einen Resonanzkörper bilden. Ferner kann das Anschlaggeräusch dadurch beeinflusst werden, dass die beiden Lagerstellen des Lagerelements mechanisch voneinander getrennt sind. Insbesondere durch die Schaffung der Möglichkeit einer Schwingungsbewegung der Lagerstellen bei Erregung durch den mechanischen Kontakt mit dem Federelement lässt sich das Anschlaggeräusch noch weiter beeinflussen. Dies kann beispielsweise dadurch realisiert werden, dass die Bereiche, an denen die beiden Lagerstellen ausgebildet sind, durch eine insbesondere schlitzförmige Aussparung voneinander getrennt und demzufolge nur teilweise über das Lagerelement miteinander verbunden sind. Hierdurch entstehen zwei in gewissen Grenzen bei mechanischer Erregung vibrationsfähige Arme, die durch ihre Vibration einen Schall bzw. ein Geräusch erzeugen.

Die erfindungsgemäße Bedieneinheit kann ein oder mehrere Federbügelelemente aufweisen, die zur Geräuscherzeugung mit Spiel gelagert sind, wie es oben beschrieben ist. Darüber hinaus kann zur definierten Beibehaltung einer Rastposition ein dafür vorgesehenes Rastelement in die Außenverzahnung des Bedienelements oder in eine andere dafür vorgesehene Verzahnung eintauchen. Die durch die Ausbildung der Verrastung des mindestens einen Federbügelelements mit der Außenverzahnung des Bedienelements unter Beibehaltung eines Spiels definierte Rastposition ist nicht auf eine einzige Stelle begrenzt, sondern nimmt einen wenn auch kleinen Bereich ein. Dies kann mitunter den Komfortanforderungen nicht genügen, weshalb eine zusätzliche einzig und allein der definierten mechanischen Verrastung des Bedienelements in seiner jeweiligen Bewegungsposition dienende Verrastung vorgesehen sein kann.

Die erfindungsgemäße Bedieneinheit mit erfindungsgemäß vorgesehener Geräuscherzeugung kann als Dreh- oder Schiebebedieneinheit ausgebildet sein.

Die Erfindung wird nachfolgend anhand eines Ausführungsbeispiels und unter Bezugnahme auf die Zeichnung näher erläutert. Im einzelnen zeigen dabei
- Fig. 1: eine Seitenansicht auf eine Bedieneinheit mit einem drehbar gelager- ten Bedienelement,
- Fig. 2: einen Schnitt entlang der Linie II-II durch die Bedieneinheit gemäß Fig. 1 und
- Fign. 3 bis 5: die von dem Federbügelelement vollführte Bewegung bei der Heraus- bewegung aus einer Vertiefung der Außenverzahnung des Bedien- elements zum Eintauchen in die dazu benachbarte Vertiefung der Au- ßenverzahnung des Bedienelements, wenn dieses gedreht wird.

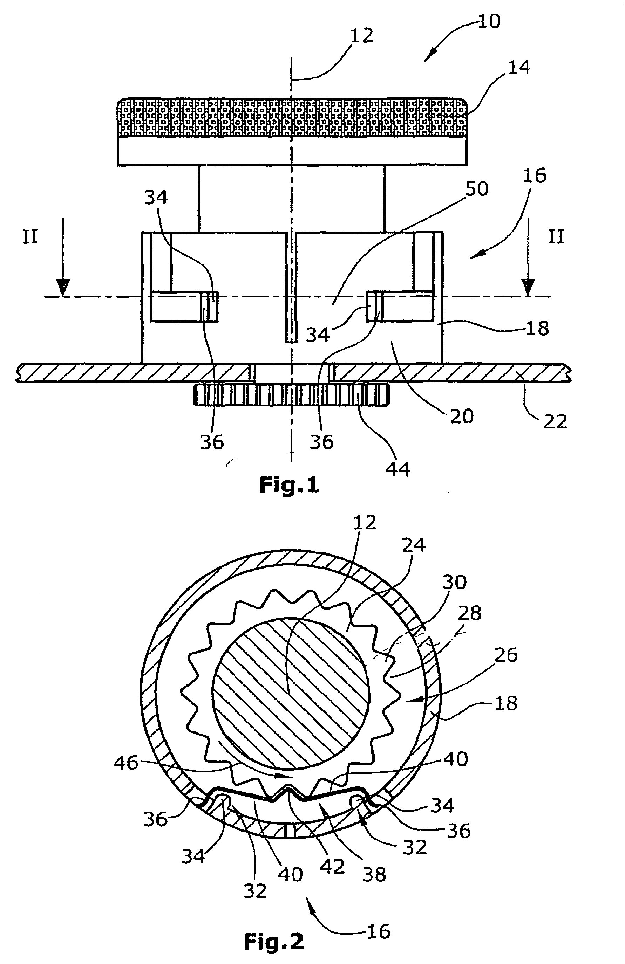

Fig. 1 zeigt in Seitenansicht ein Ausführungsbeispiel einer Bedieneinheit 10, die mit einem um eine Drehachse 12 drehbaren Bedienelement 14 versehen ist. Das Bedienelement 14 ist an einem in diesem Ausführungsbeispiel im wesentlichen zylindrischen Lagerelement 16 drehbar gelagert, das eine Umfangswandung 18 und einen Boden 20 mit Durchgangsöffnung für die Drehachse des Bedienelements 14 aufweist. Das Lagerelement 16 ist an einer Trägerplatte 22 befestigt, bei der es sich beispielsweise um eine Leiterplatine handeln kann.

Anhand von Fig. 2 ist zu erkennen, dass die Drehachse 12 ein Ringelement 24 mit Außenverzahnung 26 an seiner Umfangsfläche aufweist, wobei die Außenverzahnung 26 aus alternierend angeordneten Vertiefungen 28 und Erhöhungen 30 besteht. An der Umfangswandung 18 befinden sich zwei Lagerstellen 32, die in Form von nach innen vorstehenden Rippen oder als frei liegende Kanten 34 ausgebildet sind. Diese beiden Lagerstellen 32 sind umgriffen von den Lagerenden 36 eines Federbügelelements 38, das sich zwischen den beiden Lagerstellen 32 ohne sonstigen Kontakt mit dem Lagerelement 16 erstreckt. Das Federbügelelement 38 weist Federarme 40 auf, die an ihren einander abgewandten Enden die abgewinkelten Lagerenden 36 des Federbügelelements 38 bilden. Zwischen den einander zugewandten Enden der beiden Federarme 40 befindet sich eine durch sickenförmige Ausbildung entstandene (Rast-)Nase 42, die bei Drehung des Bedienelements 14 in die Vertiefungen 38 eintaucht und sich über die Erhöhungen 30 hinweg bewegt.

Über ein an der Drehachse 12 des Bedienelements 14 angeordnetes Ritzel o.dgl. Antriebsrad 44 wird bei Drehung des Bedienelements 14 ein Signalgeber in Form beispielsweise eines Dekoders betätigt, der die aktuelle Drehposition des Bedienelements 14 in ein elektrisches Signal umsetzt. Anstelle eines Kodierers bzw. Winkelkodierers kann als Signalgeber auch beispielsweise ein Drehpotentiometer verwendet werden.

Wie man anhand von Fig. 2 erkennen kann, ist das Federbügelelement 38 mit Spiel an den Lagerstellen 32 gelagert, wobei bei einer Erstreckung des Federbügelelements 38 von z. B. ca. 1 cm zwischen seinen Lagerenden 36 an der Lagerstelle ein Spiel von z. B. 0,5 mm gegeben ist. Auch kann ein Spiel zwischen einer Vertiefung 28 und der in dieser eingetauchten Nase 42 bestehen; dies ist aber für die im Nachfolgenden beschriebene Geräuschentwicklung bei Verdrehung des Drehelements 14 nicht notwendigerweise erforderlich.

Anhand der Fign. 2 bis 5 wird nachfolgend der Bewegungsablauf des Federbügelelements 38 beschrieben, wenn dessen Rastnase 42 sich aus einer Vertiefung 28 heraus über die sich anschließende Erhöhung 30 hinweg bis in die dazu benachbarte Vertiefung 28 hinein bewegt.

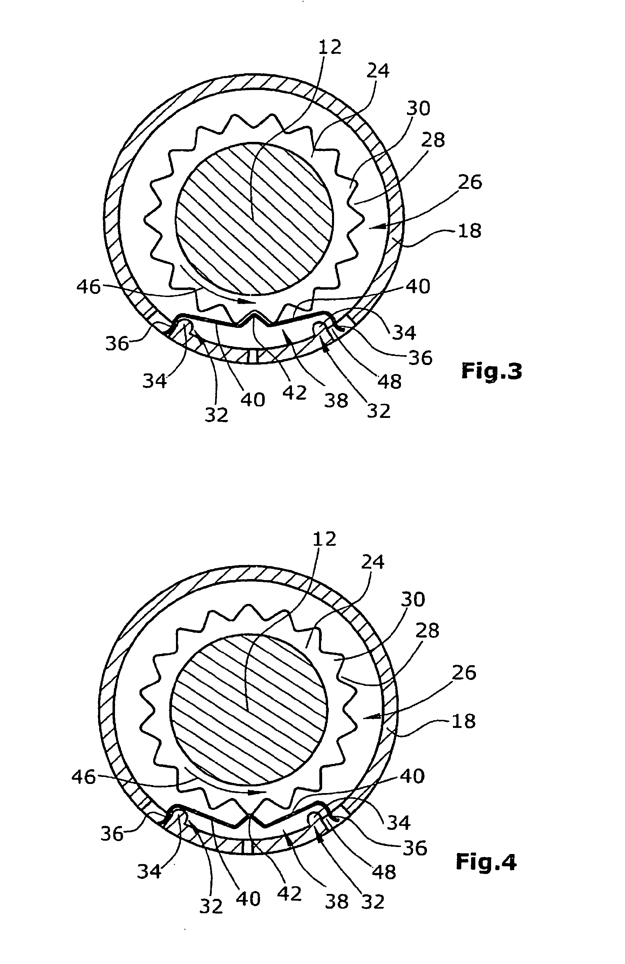

Ausgehend von der Situation gemäß Fig. 2 sei angenommen, dass das Drehelement 14 in Richtung des Pfeils 46 gedreht wird. Zu Anfang dieser Drehbewegung wird das Federbügelelement 38 in Umfangsrichtung bzw. tangential zur Drehbewegung mitgenommen, bis sein in Drehrichtung 46 betrachtet hinteres abgewinkeltes Ende 36 an der zugehörigen Lagerstelle 32 anliegt. Diese Situation ist in Fig. 3 gezeigt. Gemäß Fig. 3 befindet sich nun zwischen dem anderen abgewinkelten Lagerende 36 und der zugehörigen Lagerstelle 32 ein Spiel 48 von in diesem Ausführungsbeispiel z. B. ca. 1 mm. Bei Weiterdrehung des Drehelements 14 wird die Nase 42 unter leichter Verformung des Federbügelelements 38 aus der Vertiefung 28 herausbewegt, in der sich die Nase 42 zuvor befunden hat, und zwar durch die dieser Vertiefung 28 benachbarten Erhöhung 30.

Die Positionierung des Federbügelelements 38 relativ zu den Lagerstellen 32 bleibt dabei unverändert. Dies ist in Fig. 4 wiedergegeben.

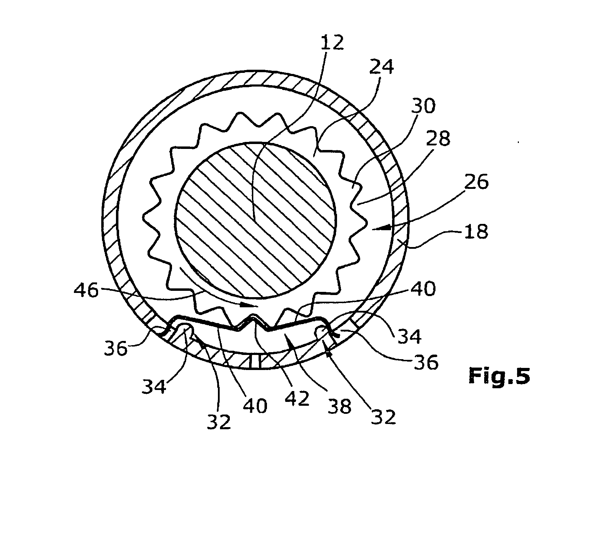

Sobald durch Weiterdrehung des Bedienelements 14 sich der Scheitelpunkt der Erhöhung 30 an der Nase 42 des Federbügelelements vorbei bewegt hat, taucht die Nase 42 selbsttätig in die der Erhöhung 30 benachbarte Vertiefung 28 ein. Dabei kommt es zu einer Lateralbewegung des Federbügelelements 38 in zur Drehbewegung des Bedienelements 14 entgegensetzter Richtung. Hierbei schlägt das Lagerende 36 des Federbügelelements 38 (s. Fig. 5), das zuvor mit Spiel relativ zu der ihm zugeordneten Lagerstelle 32 angeordnet war, gegen diese Lagerstelle 32, was zur Geräuscherzeugung führt. In dieser Position des Federbügelelements 38 relativ zu seinen Lagerstellen 32 befindet sich nun das Spiel 48 zwischen dem in Drehrichtung 46 hinteren Lagerende 36 und der Lagerstelle 32, was ebenfalls in Fig. 5 gezeigt ist.

Wie man anhand von Fig. 1 erkennen kann, ist die Umfangswandung 18 des Lagerelements 16 im Bereich der Lagerstellen 32 mehrfach geschlitzt, wodurch zwei freitragende Arme oder Bereiche 50 ausgebildet sind, an denen die Lagerstellen 32 vorgesehen sind.

Durch Wahl der Materialpaarung des Federbügelelements an seinen Lagerenden 36 und der Lagerstellen 32 kann die Geräuschentwicklung beim Anschlagen der Lagerenden 36 an die Lagerstellen 32, wie oben beschrieben, beeinflusst werden. Auch die Oberflächengestaltungen der Lagerstellen 32 und Lagerenden 36 des Federbügelelements 38 bestimmen das Klanggeräusch.

### BEZUGSZEICHENLISTE

- 10: Bedieneinheit
- 12: Drehachse
- 14: Drehelement
- 16: Lagerelement
- 18: Umfangswandung des Lagerelements
- 20: Boden
- 22: Trägerplatte
- 24: Ringelement
- 26: Außenverzahnung
- 28: Vertiefungen der Außenverzahnung
- 30: Erhöhungen der Außenverzahnung
- 32: Lagerstelle
- 34: Kanten
- 36: Lagerende des Federbügelelements
- 38: Federbügelelement
- 40: Federarme des Federbügelelements
- 42: Rastnase
- 44: Antriebsrad
- 46: Drehrichtung
- 48: Spiel
- 50: Lagerarme für das Federbügelelement

## Patentansprüche

1. Bedieneinheit für eine Fahrzeugkomponente, insbesondere für eine Heizungs-/Klimaanlage für ein Fahrzeug, mit
- einem in zwei entgegengesetzten Bewegungsrichtungen bewegbar gelagerten Bedienelement (14), an dem eine Außenverzahnung (26) angeordnet ist,
- einem Lagerelement (16), relativ zu dem das Bedienelement (14) bewegbar ist und
- einem an dem Lagerelement (16) angeordneten Federbügelelement (38), das eine mit der Außenverzahnung (26) des Bedienelements (14) zusammenwirkende Nase (42) und zwei sich von dieser erstreckende gegenüberliegende Federarme (40) aufweist, die der Nase (42) abgewandte, abgewinkelte Lagerenden (36) aufweisen,
- wobei das Federbügelelement (38) mit seinen abgewinkelten Lagerenden (36) zwei Lagerstellen (32) umgreift, die an dem Lagerelement (16) ausgebildet sind,
**dadurch gekennzeichnet,**
- **dass** das Lagerende (36) mindestens eines der Federarme (40) in dessen Erstreckung betrachtet jeweils einen Abstand zu der dem jeweiligen Lagerende (36) zugeordneten Lagerstelle (32) des Lagerelements (16) aufweist, so dass das Federbügelelement (38) bei Bewegung des Bedienelements (14) in jeder seiner beiden Bewegungsrichtungen in Erstreckung der Federarme (40) betrachtet in zwei einander entgegengesetzten Richtungen relativ zu den Lagerstellen (32) vor- und zurückbewegbar ist.

2. Bedieneinheit nach Anspruch 1, **dadurch gekennzeichnet, dass** die Lagerstellen (32) jeweils als freiliegende Kanten (34) ausgebildet sind.

3. Bedieneinheit nach Anspruch 1 oder 2, **dadurch gekennzeichnet, dass** die Oberflächen an den Lagerstellen (32) und die abgewinkelten Lagerenden (36) des Federbügelelements (38) derart ausgebildet sind, dass sich ein Flächen- oder Linienkontakt zwischen beiden einstellt.

4. Bedieneinheit nach einem der Ansprüche 1 bis 3, **dadurch gekennzeichnet, dass** die beiden Federarme (40) und die Nase (42) des Federbügelelements (38) mehrteilig oder einteilig ausgebildet sind.

5. Bedieneinheit nach einem der Ansprüche 1 bis 4, **dadurch gekennzeichnet, dass** das Federbügelelement (38) als verformter Metallsteg ausgebildet ist.

6. Bedieneinheit nach einem der Ansprüche 1 bis 5, **dadurch gekennzeichnet, dass** zumindest die abgewinkelten Lagerenden (36) des Federbügelelements (38) Metall aufweisen.

7. Bedieneinheit nach einem der Ansprüche 1 bis 6, **dadurch gekennzeichnet, dass** die Lagerstellen (32) in zwei Bereichen (50) des Lagerelements (16) ausgebildet sind, die zumindest teilweise durch eine Aussparung voneinander getrennt sind.

8. Bedieneinheit nach einem der Ansprüche 1 bis 7, **dadurch gekennzeichnet, dass** das Lagerelement (16) eine Umfangswandung (18), längs derer sich die Außenverzahnung (26) des Bedienelements (14) bewegt, aufweist und dass die Lagerstellen (32) innen an der Umfangswandung (18) angeordnet sind.

9. Bedieneinheit nach einem der Ansprüche 1 bis 8, **dadurch gekennzeichnet, dass** das Lagerelement (16) einen metallischen Werkstoff aufweist.

10. Bedieneinheit nach einem der Ansprüche 1 bis 9, **dadurch gekennzeichnet, dass** sich die beiden Federarme (40) des Federbügelelements (38) im wesentlichen in einer gemeinsamen Ebene erstrecken und an einander gegenüberliegenden Seiten der Nase (42) angeordnet sind.

11. Bedieneinheit nach einem der Ansprüche 1 bis 10, **dadurch gekennzeichnet, dass** das Bedienelement (14) drehbar gelagert ist.

12. Bedieneinheit nach einem der Ansprüche 1 bis 10, **dadurch gekennzeichnet, dass** das Bedienelement verschiebbar gelagert ist.

## Claims

1. Operating unit for a vehicle component, in particular for a heating/air condition system of a vehicle, comprising
- an operating element (14) supported for movement in two opposite directions of movement, an outer toothing (26) being arranged at said element,
- a bearing element (16) relative to which the operating element (14) can be moved, and
- a spring bracket element (38) arranged at the bearing element (16), having a nose cooperating with the outer toothing (26) of the operating element (14) and having two opposite spring arms (40) extending therefrom which have angled bearing ends (36) averted from said nose (42),
- the angled bearing ends (36) of said spring bracket element (38) engaging around two bearing sites (32) formed on the bearing element (16),
**characterized in**
- **that** the bearing end (36) of at least one of the spring arms (40), seen in the direction of the extension thereof, is spaced from the bearing site (32) of the bearing element (16) associated to said bearing end (36), so that, when the operating element (14) is moved in any of its two directions of movement, the spring bracket element (38) is movable back and forth with respect to the bearing sites (32) in two mutually opposite directions, seen in the direction of extension of the spring arms (40).

2. Operating unit according to claim 1, **characterized in that** the bearing sites (32) are formed as exposed edges (34), respectively.

3. Operating unit according to claim 1 or 2, **characterized in that** the surfaces at the bearing sites (32) and the angled bearing ends (36) of the spring bracket element (38) are formed such that a surface or line contact is realized between them.

4. Operating unit according to one of claims 1 to 3, **characterized in that** both spring arms (40) and the nose (42) of the spring bracket element (38) are of multipart or unitary structure.

5. Operating unit according to one of claims 1 to 4, **characterized in that** the spring bracket element (38) is in the form of a deformed metal web.

6. Operating unit according to one of claims 1 to 5, **characterized in that** at least the angled bearing ends (36) of the spring bracket element (38) comprise metal.

7. Operating unit according to one of claims 1 to 6, **characterized in that** the bearing sites (32) are formed in two portions (50) of the bearing element (16) which are, at least in part, separated from each other by a recess.

8. Operating unit according to one of claims 1 to 7, **characterized in that** the bearing element (16) has a peripheral wall (18) along which the outer toothing (26) of the operating element (14) moves, and that the bearing sites (32) are arranged on the inner side of the peripheral wall (18).

9. Operating unit according to one of claims 1 to 8, **characterized in that** the bearing element (16) comprises a metal material.

10. Operating unit according to one of claims 1 to 9, **characterized in that** the two spring arms (40) of the spring bracket element (38) extend substantially in a common plane and are arranged on opposite sides of the nose (42).

11. Operating unit according to one of claims 1 to 10, **characterized in that** the operating element (14) is supported for rotation.

12. Operating unit according to one of claims 1 to 10, **characterized in that** the operating element is supported for sliding.

## Revendications

**1.** Unité de commande pour un composant d'un véhicule, en particulier d'un système de chauffage/climatisation d'un véhicule, comprenant
- un élément de commande (14) supporté de manière déplaçable dans deux directions opposées, une denture externe (26) étant prévue sur ledit élément,
- un élément de support (16) par rapport auquel ledit élément de commande (14) est déplaçable, et
- un élément ressort à étrier (38) prévu audit élément de support (16), ledit élément ressort à étrier comprenant un nez (42) coopérant avec ladite denture externe (26) dudit élément de commande (14) et deux bras de ressort (40) opposés s'étendant de ce nez, les bras comprenant des extrémités de support (36) pliées et tournées dans la direction opposée au nez (42),
- lesdites extrémités de support (36) pliées dudit élément ressort à étrier (38) enveloppant deux points de support (32) formés dans ledit élément de support (16),
**caractérisée en ce**
- **que** ladite extrémité de support (36) d'au moins un des bras de ressort (40) est écartée - vu dans la direction d'extension du bras - du point de support (32) dudit élément de support (16) associé à une extrémité de support (36) respective, de manière que, lorsque ledit élément de commande (14) est déplacé dans une quelconque de ses deux directions de mouvement, ledit élément ressort à étrier (38) est apte à être réciproqué dans deux directions opposées par rapport aux points de support (32), vu dans la direction d'extension des bras de ressort (40).

**2.** Unité de commande selon la revendication 1, **caractérisé en ce que** les points de support (32) sont chacun formés comme bords exposés (34).

**3.** Unité de commande selon la revendication 1 ou 2, **caractérisé en ce que** les surfaces aux points de support (32) et les extrémités de support (36) pliées dudit élément ressort à étrier (38) sont formées de sorte que l'on obtient un contact de surface ou en ligne entre les deux.

**4.** Unité de commande selon l'une quelconque des revendications 1 à 3, **caractérisé en ce que** les deux bras de ressort (40) et le nez (42) dudit élément ressort à étrier (38) sont de construction pluripartite ou unitaire.

**5.** Unité de commande selon l'une quelconque des revendications 1 à 4, **caractérisé en ce que** ledit élément ressort à étrier (38) est configuré comme une âme métallique déformée.

**6.** Unité de commande selon l'une quelconque des revendications 1 à 5, **caractérisé en ce qu'**au moins les extrémités de support (36) pliées dudit élément ressort à étrier (38) comprennent de métal.

**7.** Unité de commande selon l'une quelconque des revendications 1 à 6, **caractérisé en ce que** les points de support (32) son formés dans deux régions (50) dudit élément de support (16) qui sont au moins partiellement séparées par un creux.

**8.** Unité de commande selon l'une quelconque des revendications 1 à 7, **caractérisé en ce que** ledit élément de support (16) comprend une paroi périphérique (18), le long de laquelle se déplace ladite denture externe (26) dudit élément de commande (14), et que les points de support (32) sont prévus sur la face intérieure de ladite paroi périphérique (18).

**9.** Unité de commande selon l'une quelconque des revendications 1 à 8, **caractérisé en ce que** ledit élément de support (16) comprend un matériau métallique.

**10.** Unité de commande selon l'une quelconque des revendications 1 à 9, **caractérisé en ce que** les deux bras de ressort (40) dudit élément ressort à étrier (38) s'étendent sensiblement dans un plan commun et sont prévus sur des côtes opposés du nez (42).

**11.** Unité de commande selon l'une quelconque des revendications 1 à 10, **caractérisé en ce que** l'élément de commande (14) est supporté de manière rotative.

**12.** Unité de commande selon l'une quelconque des revendications 1 à 10, **caractérisé en ce que** ledit élément de commande est supporté de manière pivotable.
